# EUROPEAN PATENT APPLICATION

(11) **EP 4 708 099 A1**
(43) Date of publication of application: **11.03.2026**
(21) Application number: 25160448.4
(22) Date of filing: 27.02.2025
(51) Int. Cl.: G06F 21/57, H04L 9/40

(54) **SYSTEM AND METHOD FOR PRESENTING SECURITY MEASURES**

(30) Priority: 05.09.2024 JP 2024153444
(71) Applicant: Hitachi, Ltd., Tokyo 100-8280 (JP)
(72) Inventor: SAKATA, Kosei, Tokyo, 100-8280 (JP); OGURA, Takashi, Tokyo, 100-8280 (JP); MATSUMOTO, Noritaka, Tokyo, 100-8280 (JP); TAKEMOTO, Satoshi, Tokyo, 100-8280 (JP)
(74) Representative: MERH-IP Matias Erny Reichl Hoffmann Patentanwälte PartG mbB

(57) **Abstract**

Disclosed is a security measures presenting system for presenting information indicating security measures by displaying the information on a display device. The security measures presenting system is configured of a computer which includes at least an arithmetic device and a storage device, and is mutually connected to an input device and the display device outside the computer in a manner capable of mutual data communication. The storage device stores rule information with respect to a rule concerning security, the rule information including at least a target system indicating a targeted system to which a security measure is to be applied, and required items for a component included in the target system; and measure information indicating a kill chain phase which represents an execution phase of an attack, an attack technique which represents an attack method to be used in the kill chain phase, and measures for defending and/or alleviating the attack technique. The arithmetic device associates a required item included in the rule information with the measure information which satisfies the required item, receives content of an input operation by a user to the input device from the input device, extracts a measure according to the content of the received input operation by the user from the measure information associated with the required item, and transmits information including the extracted measure, as information indicating the security measure, to the display device.

## Description

### CROSS-REFERENCE TO RELATED APPLICATION

The present application claims priority pursuant to 35 U.S.C. §119 from Japanese patent application no. 2024-153444 filed on September 5, 2024, the entire disclosure of which is hereby incorporated herein by reference.

### BACKGROUND

### Technical Field

The present invention relates to a technology for presenting security measures.

### Related Art

In recent years, along with an increase of cyberattacks to OT (Operational Technology) systems such as important infrastructures, development of various rules such as laws, regulations, and restrictions regarding cybersecurity (hereinafter generally referred to as the "security laws and regulations" or the "laws and regulations") has been rapidly promoted. For example, in Europe, a bill for the EU (European Union) Cyber Resilience Act was published in September 2022 to demand that security measures should be applied to all IoT (Internet of Things) devices distributed within the EU, excluding digital products related to medical treatments, airplanes, national defense, and automobiles.

The enforcement of this Cyber Resilience Act in 2025 is under consideration; and after the enforcement, penalties will be imposed on business operators who violate the Cyber Resilience Act, so there is an urgent need for companies which deal in IoT devices to set security measures throughout the entire life cycle of target products.

Moreover, in Japan as well, the risks of occurrence of cyberattacks targeted mainly at infrastructure companies or the like continue to increase these days. In May 2022, the Economic Security Promotion Act was established and promulgated out of concern for the above-described situation. Accordingly, a system for the government to examine in advance, for example, the introduction of important equipment by an infrastructure company has been introduced since February 2024 so that infrastructure services such as electricity, communications, and finance will be provided stably to infrastructure companies in Japan.

Because of the above-described trends in Japan and abroad regarding the security laws and regulations, the infrastructure companies are required to comply with the rules including the security laws and regulations with respect to the OT systems and OT products which they and/or their clients deal in.

Under this circumstance, there is known a technology that manages importance degree information and vulnerability information of information assets in order to recognize whether the information assets such as electronic files are in a vulnerable state against cyberattacks or not (for example Japanese Patent Application Laid-Open Publication No. 2012-133584 (Patent Literature 1)).

### SUMMARY OF THE INVENTION

In order to ensure sufficiently strong cybersecurity for the information assets, it is necessary to comply with the rules exemplified in the aforementioned explanation and implement the measure(s) accurately.

When an attempt is made for the above-described purpose to, for example, accurately interpret the content specified in the rules, automatically identify an appropriate measure(s), and present the result to a user, there exists a problem of accuracy regarding the adequacy of the measure(s) which is automatically identified.

Regarding this point, the technology described in Patent Literature 1 only manages the importance degree information of the relevant information asset(s). Therefore, the problem is that even if an attempt is made to automatically identify an appropriate measure(s) in accordance with the security laws and regulations and present the measure (s) to the user by using the technology described in Patent Literature 1, no consideration is made regarding a mechanism for supporting the adequacy of the automatically identified measure(s) and it is impossible to automatically identify the appropriate measure(s).

The present invention was devised in light of the above-described problem and it is an object of the invention to provide a technology capable of automatically identifying an appropriate measure(s) in accordance with various kinds of rules such as laws, regulations, and restrictions regarding security and presenting the identified appropriate measure(s) to a user.

A security measures presenting system according to the present invention is a system for presenting information indicating security measures by displaying the information on a display device and the security measures presenting system is configured of a computer which includes at least an arithmetic device and a storage device and is mutually connected to an input device and the display device outside the computer in a manner capable of mutual data communication, wherein the storage device stores: rule information with respect to a rule concerning security, the rule information including at least a target system indicating a targeted system to which a security measure is to be applied, and required items for a component included in the target system; and measure information indicating a kill chain phase which represents an execution phase of an attack, an attack technique which represents an attack method to be used in the kill chain phase, and measures for defending and/or alleviating the attack technique; and wherein the arithmetic device: associates a required item included in the rule information with the measure information which satisfies the required item; receives content of an input operation by a user to the input device from the input device; extracts a measure according to the content of the received input operation by the user from the measure information associated with the required item; and transmits information including the extracted measure, as information indicating the security measure, to the display device.

### ADVANTAGEOUS EFFECTS OF THE INVENTION

According to the present invention, it is possible to automatically identify an appropriate measure(s) in accordance with various kinds of rules such as laws, regulations, and restrictions regarding security and present the identified appropriate measure(s) to the user.

Other than the above, the problems and their solutions which are disclosed by this application will be clarified by the section of DETAILED DESCRIPTION OF THE INVENTION and drawings.

### BRIEF DESCRIPTION OF THE DRAWINGS

Fig. 1 is a diagram illustrating an example of a hardware configuration of the entire system including a security measures presenting system according to the first and second embodiments;
Fig. 2 is a diagram illustrating an example of functional blocks of the security measures presenting system according to the first embodiment;
Fig. 3 is a diagram illustrating an example of the configuration of a laws and regulations database according to the first and second embodiments;
Fig. 4 is a diagram illustrating an example of the configuration of a security knowledge database according to the first and second embodiments;
Fig. 5 is a flowchart illustrating an example flow of feature value calculation processing according to the first and second embodiments;
Fig. 6 is a diagram illustrating an example of the configuration of an accountable database according to the first embodiment;
Fig. 7 is a flowchart illustrating an example flow of measure presenting processing according to the first and second embodiments;
Fig. 8 is a diagram illustrating an example of a display screen according to the first embodiment;
Fig. 9 is a diagram illustrating an example of functional blocks of the security measures presenting system according to the second embodiment;
Fig. 10 is a flowchart illustrating an example flow of data preprocessing according to the second embodiment;
Fig. 11 is a diagram illustrating an example of the configuration of an accountable database according to the second embodiment; and
Fig. 12 is a diagram illustrating an example of a display screen according to the second embodiment.

### DETAILED DESCRIPTION OF THE INVENTION

Some embodiments of the present invention will be described in detail with reference to the drawings. However, the present invention is not limited to the description content of the embodiments and variations indicated below. Examples whose specific configurations are changed are also included without departing from the idea or gist of the present invention. For example, the respective embodiments indicated below describe the present invention in detail and are not necessarily limited to those having all the configurations included in the descriptions.

In the configurations of the invention described below, the same reference numerals will be used in common between different drawings to indicate identical parts and/or elements or parts and/or elements having similar functions and any redundant explanations may sometimes be omitted.

Moreover, on one hand, if there are a plurality of identical parts and/or elements or parts and/or elements having similar functions, different subscripts may sometimes be attached to the same reference numeral to describe and distinguish between the plurality of parts and/or elements. On the other hand, if it is unnecessary to distinguish between the plurality of parts and/or elements, they may sometimes be described by omitting the subscripts.

The expressions "first," "second," "third," and so on in, for example, this description are attached to identify constituent elements and do not necessarily limit their quantity, sequential order, or content. Also, characters or numbers for identifying the constituent elements are used in each context; and the characters or numbers used in one context do not necessarily indicate the same configuration in other contexts. Furthermore, this does not preclude a constituent element identified with a certain character or number from also having functions of constituent elements identified with other characters or numbers.

The location, size, shape, range, and so on of each constituent element indicated in this description and/or the drawings may not represent the actual location, size, shape, range, etc. in order to facilitate understanding of the invention. Therefore, the present invention is not necessarily limited to the locations, sizes, shapes, ranges, etc. disclosed in this description and/or the drawings.

Unless specifically clarified in the context, any constituent element indicated in a singular form in this description shall include its plural form.

In the description indicated below, an "interface device" may be one or more interface devices. The one or more interface devices may be at least one of the following:
- One or more input/output interfaces. The input/output interface is an interface device for at least one of an I/O (Input/Output) device and a remote display computer. The I/O interface for the display computer may be a communication interface device. At least one I/O device may be a user interface device, for example, either one of input interface devices such as a keyboard and a pointing device, and output interface devices such as a display device.
- One or more communication interfaces. The one or more communication interfaces may be one or more communication interface devices of the same type (for example, one or more NICs (Network Interface Cards)) or two or more communication interface devices of different types (for example, an NIC and an HBA (Host Bus Adapter)). Incidentally, for example, the Internet, a LAN (Local Area Network), a WAN (Wide Area Network), or a mobile phone network can be assumed as a network to be accessed by the communication interface upon communication, but the network is not limited to the above-mentioned examples.

Furthermore, in the description indicated below, a "storage device" includes at least one or more memories. At least one memory may be a volatile memory or a nonvolatile memory. The storage device may include one or more PDEVs in addition to the one or more memories. The "PDEV" means a physical storage device and may typically be a nonvolatile storage device (for example, an auxiliary storage device). The PDEV may be, for example, an HDD (Hard Disk Drive), an SSD (Solid State Drive), an NVME (Non-Volatile Memory Express) drive, or an SCM (Storage Class Memory).

Furthermore, in the description indicated below, an "arithmetic device" is one or more processor devices. At least one processor device may typically be a microprocessor device like a CPU (Central Processing Unit), but may also include other types of processor device such as a GPU (Graphics Processing Unit), an MPU (Micro Processing Unit), or a DSP (Digital Signal Processor). At least one processor device may be single-core or multi-core. At least one processor device may be a processor core. At least one processor device may be a processor device in a broad sense such as a hardware circuit which performs part or all of processing (for example, FPGA (Field-Programmable Gate Array), CPLD (Complex Programmable Logic Device), or ASIC (Application Specific Integrated Circuit)), or may include such processor device (s) in the broad sense.

Furthermore, in the description indicated below, a function may be sometimes described by an expression like "xxx unit"; however, the function may be implemented by execution of one or more computer programs (hereinafter simply referred to as the "program(s)") by the arithmetic device, or may be implemented by one or more hardware circuits (such as FPGA or ASIC), or may be implemented by a combination of the above. If the function is implemented by the execution of a program by the arithmetic device, specified processing is performed by using, for example, storage devices and/or interface devices as appropriate and, therefore, the function may be considered as at least part of the arithmetic device. The processing explained by referring to the function as a subject may be the processing executed by the arithmetic device or by a system and/or a device which has that arithmetic device. The program may be installed from a program source. The program source may be, for example, a program distribution computer or a computer-readable recording medium (such as a non-transitory recording medium). An explanation of each function is one example, and a plurality of functions may be gathered as one function or one function may be divided into a plurality of functions.

Furthermore, in the description, there may be a case where processing will be explained by referring to a "program" as a subject; however, the processing explained by referring to the program as a subject may be processing performed by the arithmetic device or by a device or a system having that arithmetic device. The program may be installed from a program source to a device such as a computer. The program source may be, for example, a program distribution server or a computer-readable recording medium (such as a non-transitory recording medium). Moreover, in the following description, two or more programs may be implemented as one program or one program may be implemented as two or more programs.

Furthermore, in the following description, information which is obtained as output in response to input may be sometimes described by an expression like a "yyy database" or an "yyy table"; however, such information may be expressed by data of whatever structure (for example, either structured data or unstructured data) or may be a learning model represented by a neural network, a genetic algorithm, or a random forest which generates outputs in response to input. Therefore, the "yyy database" or the "yyy table" can be paraphrased as "yyy information." Furthermore, in the following description, the structure of each database or table is one example and one database or table may be divided into two or more databases or tables or all or some of two or more databases or tables may be one database or table.

Furthermore, in the following explanation, a "data set(s)" means data composed of one or more data elements (one chunk of logical electronic data) and may be any one of, for example, a record(s), a file(s), a key value pair(s), and a tuple (s).

Furthermore, in the following description, a "security measures presenting system" or a "security measures presenting device" may be a device or system configured of one or more physical computers (such as an on-premise-type device or system) or may be a system (such as a cloud computing system) which is implemented on a physical calculation resource group (such as a cloud infrastructure). The security measures presenting system and/or the security measures presenting device "displaying" display information may be to display the display information on a display device possessed by a computer (the security measures presenting system and/or the security measures presenting device) or may be for a computer (the security measures presenting system and/or the security measures presenting device) to transmit the display information to a display computer (the display device) (in the latter case, the display information is displayed by the display computer (the display device)).

### First Embodiment

### <System Configuration Example>

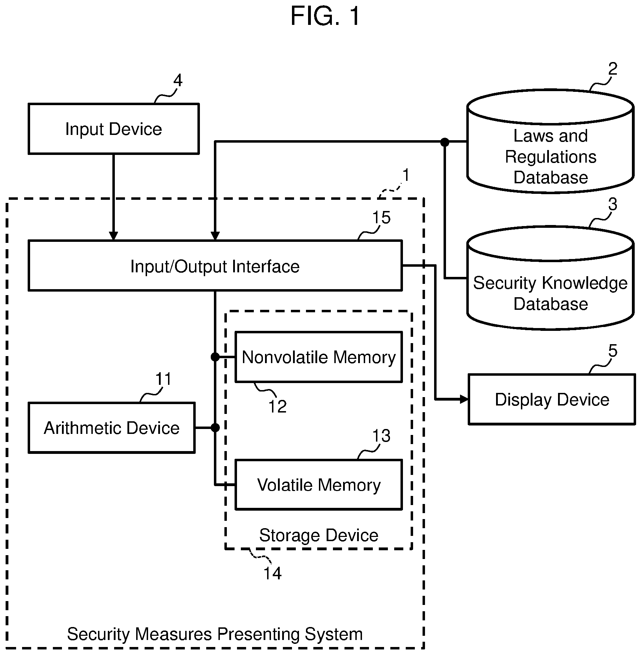

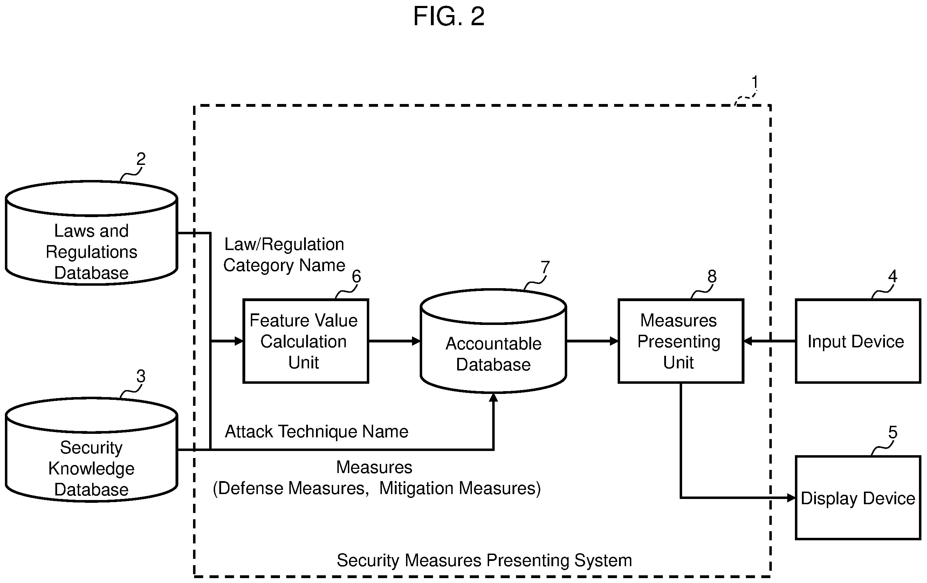

Firstly, a configuration example of a security measures presenting system 1 according to the first embodiment (and the second embodiment described later) will be explained by using Figs. 1 and 2.

Fig. 1 is a diagram schematically illustrating an example of a hardware configuration of the entire system including the security measures presenting system 1 according to the first and second embodiments. Moreover, Fig. 2 is a diagram schematically illustrating functional blocks of the security measures presenting system 1 according to the first embodiment.

### (Configuration Example of the Entire System)

The security measures presenting system 1 according to the first embodiment (and the second embodiment described later) is schematically a computer system that: is capable of automatically deciding an appropriate security measure(s) required by the laws and regulations according to an input operation by a user with respect to various kinds of control systems (OT (Operational Technology) systems) whose control targets are, for example, important infrastructures, and various kinds of control equipment (OT products) which is components (devices) constituting the control systems, and presenting the decided appropriate security measure(s), together with the basis for deciding the security measure(s), to the user; and is implemented by at least one or more computers and/or servers, each of which is equipped with the respective configurations described later. Specifically speaking, the security measures presenting system 1 is a computer system which is physically configured of one computer or which is configured of a plurality of logically or physically configured computers; and the security measures presenting system 1 may operate in separate threads on the same computer or may operate on a virtual computer which is constructed in a plurality of physical computer resources. Incidentally, in this embodiment (and the second embodiment described later), the security measures presenting system 1 will be explained as being composed of one server; however, the security measures presenting system 1 may be configured from, for example, a plurality of computers and/or servers.

A data server which stores a laws and regulations database 2 (whose details will be described later) and a security knowledge database 3 (whose details will be described later) is connected, as illustrated in Figs. 1 and 2, to a server which configures this security measures presenting system 1 via an appropriate communication network such as the Internet or a dedicated line (hereinafter also simply referred to as the "network") so that they can perform mutual data communication. Incidentally, in this embodiment (and the second embodiment described later), it will be explained that the data server which stores the laws and regulations database 2, and the data server which stores the security knowledge database 3 are configured as separate devices; however, the laws and regulations database 2 and the security knowledge database 3 may be stored in, for example, the same data server. Moreover, the server which configures the security measures presenting system 1, each data server which stores the laws and regulations database 2 and/or the security knowledge database 3, and the network are connected to each other by wire via well-known communication equipment (which is not illustrated in the drawing), but they may be connected wirelessly.

Furthermore, various kinds of terminals such as laptop PCs, tablets, smartphones, etc. possessed by, for example, security consultants, system administrators of companies or the like, and operators of the security measures presenting system 1 who are users of the security measures presenting system 1, in a manner including input devices 4a, 4b, 4c, and so on up to 4n (hereinafter collectively referred to as the "input device(s) 4" when they are mentioned collectively or are not particularly distinguished from one another) and display devices 5a, 5b, 5c, and so on up to 5n (hereinafter collectively referred to as the "display device(s) 5" when they are mentioned collectively or are not particularly distinguished from one another), are respectively connected to the server which configures this security measures presenting system 1, via the network as illustrated in Figs. 1 and 2 so that they can mutually perform data communication. Of these terminals, the input device(s) 4 is various kinds of input interface devices, such as a keyboard, a pointing device, and a touch panel, for accepting input operations from the user(s) of the security measures presenting system 1. Moreover, the display device(s) 5 is various kinds of output interface devices, such as a liquid crystal display and a touch screen, for outputting the processing results in a visually recognizable format to the user(s) of the security measures presenting system 1. Incidentally, in this embodiment (and the second embodiment described later), it will be explained that the input device 4 and the display device 5 are integrally operated in a manner respectively in charge of the input function and the output function in the same terminal; however, for example, the input device 4 and the display device 5 may be implemented as separate terminals. Moreover, each input device 4 and/or each display device 5 and the network are connected to each other wirelessly, but they may be connected by wire. A unique ID called a user ID is assigned in advance to each user of the security measures presenting system 1 which possesses the input device(s) 4 and/or the display device(s) 5.

Moreover, for example, other various kinds of devices and terminals (hereinafter also simply referred as the "other devices") may be connected to the server which configures this security measures presenting system 1, via the network so that they can mutually perform data communication. In this case, the other devices and the network may be connected by wire via well-known communication equipment or may be connected wirelessly. Also, in this case, the security measures presenting system 1 may obtain, for example, various kinds of data to be used for each processing described later from the other devices described above.

Incidentally, in this embodiment, the server which configures the security measures presenting system 1, the data server which stores the laws and regulations database 2, the data server which stores the security knowledge database 3, and various kinds of devices such as the input device(s) 4 and the display device(s) 5 have been described as separate devices. However, the security measures presenting system 1 and these various kinds of devices may be configured of, for example, the same device. In this case, the security measures presenting system may be configured as, for example, a system including these various kinds of devices. Also, the security measures presenting system may be configured in a manner including some or all the functions served by these various kinds of devices, for example, as in a case where the laws and regulations database 2 and the security knowledge database 3 are stored in its own storage device 14 in advance.

### (Hardware Configuration Example of Security Measures Presenting System 1)

Next, an example of the hardware configuration of the security measures presenting system 1 will be explained by using Fig. 1.

The security measures presenting system 1 according to the first and second embodiments is implemented by at least one or more computers and/or servers as mentioned earlier. The following description will be made by assuming that the security measures presenting system 1 according to this embodiment (and the second embodiment described later) is implemented by one or more arithmetic devices 11, the storage device 14 composed of one or more nonvolatile memories 12 and one or more volatile memories 13, an interface device (which is not illustrated in the drawing) composed of one or more communication interfaces (which are not illustrated in the drawing) and one or more input/output interfaces 15, and one general-purpose server including wired or wireless communication lines for connecting the above-mentioned devices.

Specifically speaking, the security measures presenting system 1 has the storage device 14 including the nonvolatile memory 12 and the volatile memory 13, the interface device including the communication interface and the input/output interface 15, and the arithmetic device 11 connected to the above-mentioned devices.

On one hand, the nonvolatile memory 12 includes a nonvolatile storage element(s) which is mainly used as an auxiliary storage device such as a flash memory, and a nonvolatile storage element(s) which is used as a main storage device such as a ROM (Read Only Memory). Specific examples of the nonvolatile memory 12 used as the auxiliary storage device include an SSD(s) (Solid State Drive(s)) and an HDD(s) (Hard Disk Drive(s)). The nonvolatile memory 12 which is used as the auxiliary storage device stores at least a security measures presenting program. The security measures presenting program is a computer program for implementing necessary functions as the security measures presenting system 1.

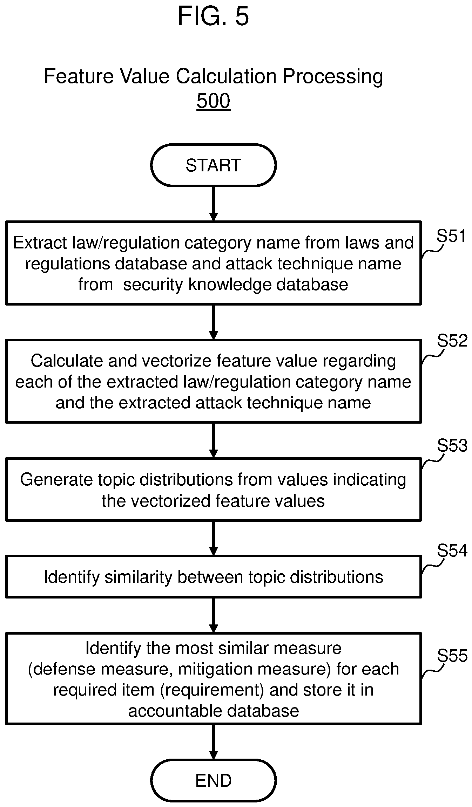

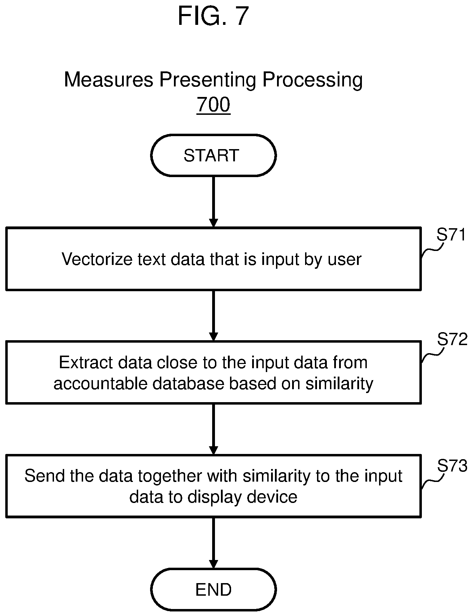

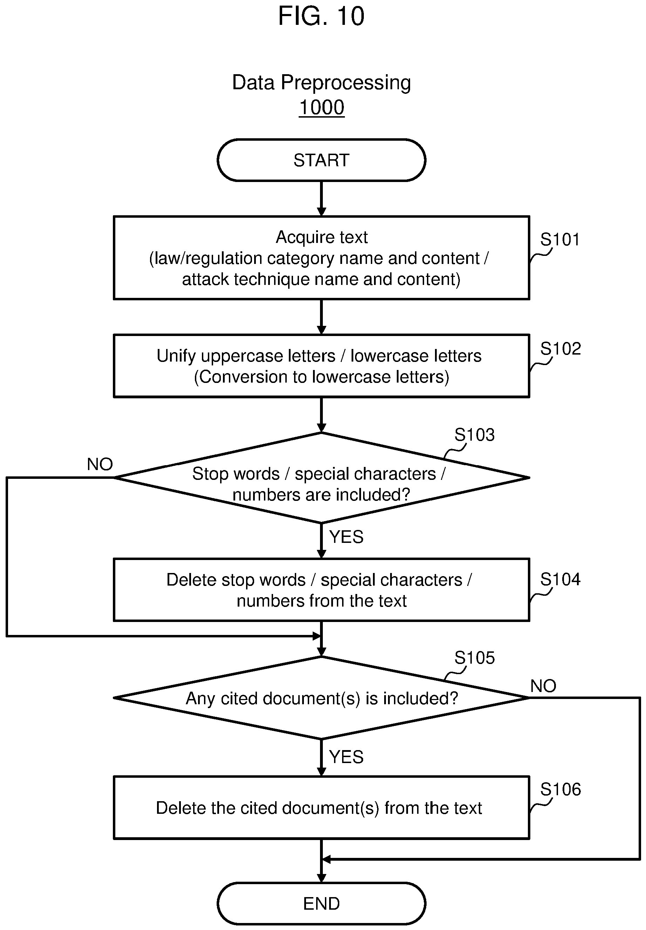

Specifically speaking, as this security measures presenting program is executed by the arithmetic device 11, functions served by the respective functional units possessed by the security measures presenting system 1, such as a feature value calculation unit 6 and a measure presenting unit 8, and a data preprocessing unit 9 according to the second embodiment which will be described later. In other words, as the security measures presenting program is executed by the arithmetic device 11, various kinds of processing are performed including, for example, processing relating to the calculation of feature values which will be described later in relation to Fig. 5 (hereinafter referred to as "feature value calculation processing"), processing relating to the presentation of the security measures which will be described later in relation to Fig. 7 (hereinafter referred to as "measure presenting processing"), and processing relating to data preprocessing which will be described later in relation to Fig. 10 in the second embodiment (hereinafter referred to as "data preprocessing").

Incidentally, the security measures presenting program may be installed from a program source. The program source may be, for example, a program distribution computer or a computer-readable storage medium. Also, the security measures presenting program may be configured of a device driver, an operating system, various kinds of application programs positioned in an upper layer of the above-mentioned device driver or operating system, or a library for providing functions in common with these programs. Furthermore, two or more programs may be implemented as one security measures presenting program or one security measures presenting program may be implemented as two or more programs.

Moreover, the nonvolatile memory 12 includes, for example, a nonvolatile storage element(s) used as a main storage device such as a ROM (Read Only Memory) as describe earlier. The ROM stores immutable programs (such as BIOS (Basic Input/Output System)).

Specifically speaking, the nonvolatile memory 12 is a storage medium (one type of the storage device 14) capable of reading various kinds of computer programs including the security measures presenting program.

On the other hand, the volatile memory 13 is, for example, a volatile storage element(s) used as a main storage device such as a RAM (Random Access Memory). This volatile memory 13 temporarily retains data indicating various kinds of information read from the nonvolatile memory 12, and various kinds of data and signals obtained via the communication interface and/or the input/output interface 15.

The arithmetic device 11 is a processor device such as a CPU (Central Processing Unit) and various kinds of coprocessors. This arithmetic device 11 manages a control unit (which is not illustrated in the drawing) that performs integrated control of the security measures presenting system 1 itself by invoking various kinds of computer programs including the security measures presenting program to the volatile memory 13 and executing them, and performs various kinds of processing such as arithmetic processing and judgment processing.

The interface device includes a communication interface that manages a communication unit which will be described later, and the input/output interface 15 that manages an input unit and an output unit which will be described later.

The communication interface is a communication interface device that connects to the network and controls communication with the data server which stores the laws and regulations database 2, the data server which stores the security knowledge database 3, and other various kinds of devices such as the input device 4 and the display device 5.

The input/output interface 15 is an input/output interface device that accepts various kinds of input operations, which have been performed by the user of the security measures presenting system 1 to the input device 4, from the input device 4 via the network and causes the display device 5 via the network to display the results of the various kinds of processing executed by the security measures presenting system 1.

Incidentally, the security measures presenting system 1 may be implemented by an independent device or by embedded equipment.

### (Example of Functional Blocks of Security Measures Presenting System 1 According to the first embodiment)

Next, an example of blocks of various kinds of functions possessed by the security measures presenting system 1 according to the first embodiment will be explained by using Fig. 2. Incidentally, the respective blocks described below indicate blocks of functional units, but not configurations of hardware units.

The security measures presenting system 1 is configured by including the respective functional blocks of a control unit, a storage unit, and a communication unit, and a user interface unit which is composed of an input unit and an output unit (none of which is illustrated in the drawing).

The control unit executes various kinds of data processing based on programs and data which are stored in the storage unit, and data obtained by the communication unit. Moreover, the control unit executes, for example, various kinds of processing such as the aforementioned feature value calculation processing (whose details will be described later in relation to Fig. 5) and the measure presenting processing (whose details will be described later in relation to Fig. 7). The control unit also functions as an interface for the storage unit and the communication unit.

The control unit has respective functional blocks of the feature value calculation unit 6 and the measure presenting unit 8 as illustrated in Fig. 2.

The feature value calculation unit 6 executes the feature value calculation processing. Under this circumstance, this feature value calculation processing is schematically processing for extracting text data respectively from data such as required items under the laws and regulations, which are recorded in the laws and regulations database 2 (hereinafter also referred to as the "required items" or "requirements"), and data such as attack techniques and measures which are recorded in the security knowledge database 3 (hereinafter also referred to as "defense measures" or "mitigation measures"), and calculating their feature values. Moreover, the feature value(s) herein used means an importance degree or rarity of words in the relevant text, which is expressed quantitatively. The feature value calculation unit 6 finds topic distributions (whose details will be described later) regarding these values, respectively, measures similarity between the topic distributions, and stores the measurement result in the accountable database 7. This similarity between the topic distributions is an index indicating a degree of appropriateness which is automatically identified by the security measures presenting system 1 and is then presented to the user. Then, the appropriateness (and/or adequacy) of the relevant measure is secured by the security measures presenting system 1 by automatically identifying the measure to be presented to the user based on the similarity between the topic distributions. The details of the feature value calculation processing will be described later in relation to Fig. 5.

Moreover, the measure presenting unit 8 executes the measure presenting processing. Under this circumstance, this measure presenting processing is schematically processing for extracting the related data from the accountable database 7 according to the content of the user's input operation accepted via the input device 4, transmitting the extracted related data to the display device 5, and presenting it as the security measure(s). Under this circumstance, the relevant related data is extracted with the similarity to the relevant input information from the accountable database 7. Specifically speaking, this measure presenting unit 8 operates in accordance with the accountable database 7 which is decompressed in the volatile memory 13. The details of the measure presenting processing will be described later in relation to Fig. 7.

The control unit is configured by using the arithmetic device 11 and can implement these functional blocks by executing a specified security measures presenting program. Incidentally, the control unit may be configured by using, for example, a logical circuit such as an ASIC (application specific integrated circuit) or an FPGA (Field Programmable Gate Array), as the arithmetic device 11.

The storage unit is configured by using, for example, the storage device 14 composed of the nonvolatile memory 12 and the volatile memory 13, and stores programs for supplying various kinds of processing instructions to the control unit and data indicating various kinds of information to be used in the processing executed by the control unit.

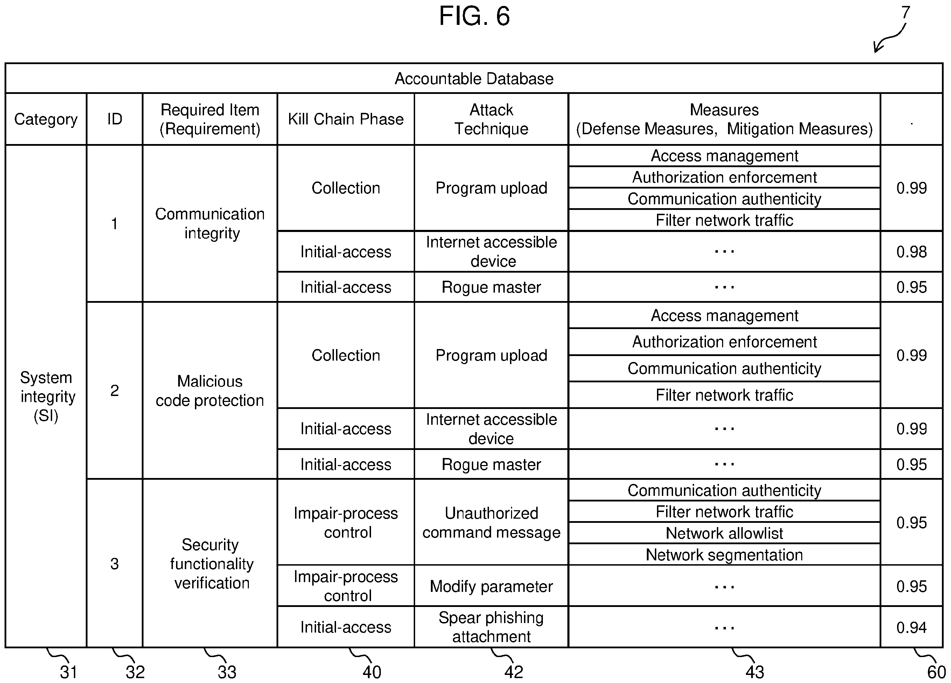

The storage unit stores, for example, at least the accountable database 7. Under this circumstance, this accountable database 7 schematically records data extracted from the laws and regulations database 2 and data extracted from the security knowledge database 3 in a manner linking them based on the similarity between these pieces of data as calculated by the feature value calculation processing (for example, the similarity regarding the required item(s) under the laws and regulations and its corresponding attack technique(s)). The details of the accountable database 7 will be described later in relation to Fig. 6.

The control unit can execute various kinds of processing such as the feature value calculation processing (whose details will be described later with reference to Fig. 5) and the measure presenting processing (whose details will be described later with reference to Fig. 7) mentioned earlier by reading and writing these pieces of information from and to the storage unit.

The communication unit is in charge of communication processing, which is performed via the Internet (an example of the network), with the data server which stores the laws and regulations database 2, the data server which stores the security knowledge database 3, and other various kinds of devices such as the input device 4 and the display device 5. The communication unit is configured by using, for example, an NIC (Network Interface Card) and an HBA (Host Bus Adapter).

The user interface unit is configured by including the respective functional blocks of the input unit and the output unit.

Of the processing regarding the user interface, the input unit is in charge of processing regarding inputs such as accepting the input operations from the user via the input device 4. The input device 4 is configured by using, for example, various kinds of input interface devices such as a keyboard, a pointing device, and a touch panel and detects various kinds of operations from the user. The input unit converts, for example, a data input signal received from the input device 4 and signals which are input from the laws and regulations database 2 and the security knowledge database 3, into data in a format computable by the arithmetic device 11.

Of the processing regarding the user interface, the output unit is in charge of processing regarding outputs such as displaying of various kinds of screens on and audio outputs to the display device 5. The display device 5 is configured by using, for example, at least various kinds of output interface devices such as a liquid crystal display, a touch screen, and a printer. The output unit, for example, generates an output signal according to the computation result of the arithmetic device 11 and outputs that signal to the display device 5.

Specifically speaking, the respective constituent elements of the security measures presenting system 1 are implemented by cooperative operations between the arithmetic device 11, the storage device 14 such as the nonvolatile memory 12 and the volatile memory 13, the interface devices such as the communication interface and the input/output interface 15, hardware including wired or wireless communication lines for connecting the above-mentioned devices, and software which is stored in the storage device 14 and supplies processing instructions to the arithmetic unit.

In this embodiment, it has been explained that the respective functions of the security measures presenting system 1 are integrally implemented by one server. However, these respective functions possessed by the security measures presenting system 1 may be implemented by a plurality of computers and/or servers which are connected to each other. Moreover, the security measures presenting system 1 may be configured to include a general-purpose computer such as a laptop PC and a web browser installed therein, or may be configured to include various kinds of mobile equipment.

Moreover, the security measures presenting system 1 may further have another/other function(s) in addition to the above-mentioned various kinds of functions.

### <Database Configuration Examples>

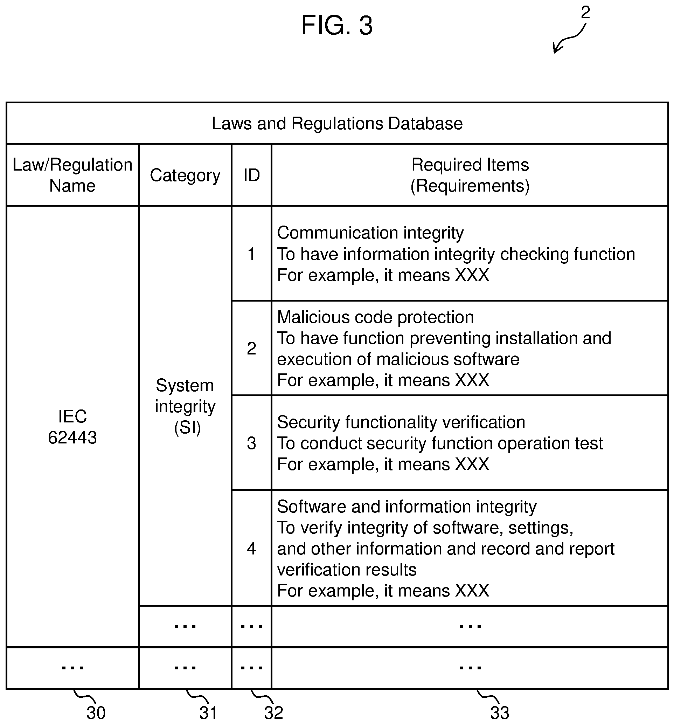

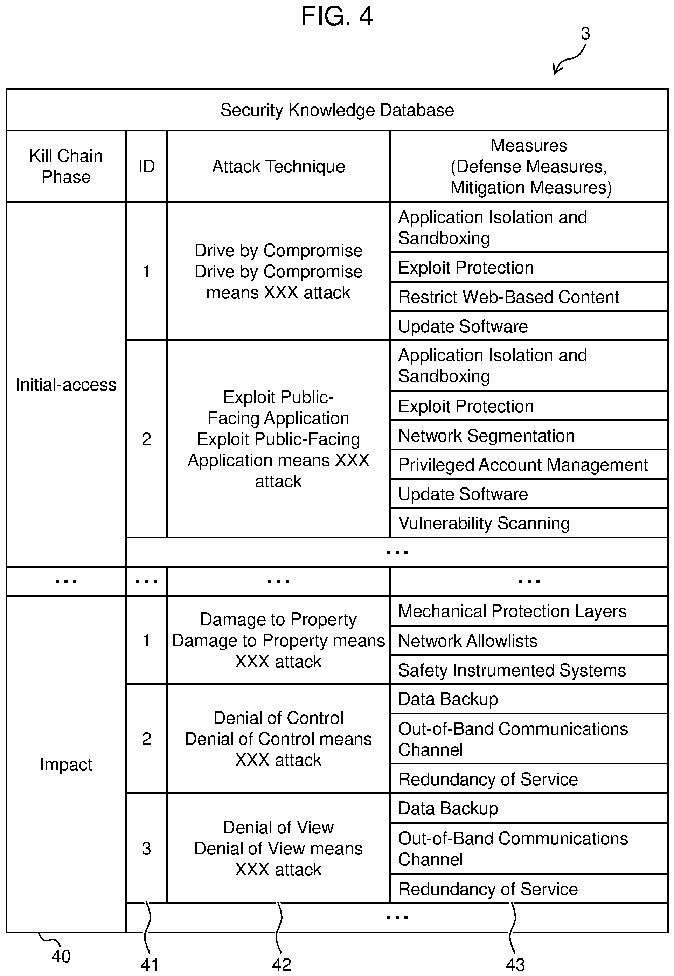

Next, an explanation will be provided about examples of the configurations of the laws and regulations database 2 and the security knowledge database 3, from which the various kinds of data of the security measures presenting system 1 are obtained, by using Figs. 3 and 4.

### (Configuration Example of Laws and Regulations Database 2)

Fig. 3 is a diagram illustrating an example of the configuration of the laws and regulations database 2 according to the first and second embodiments.

The laws and regulations database 2 is a database for managing information about the laws and regulations concerning the cybersecurity. Records of the laws and regulations database 2 include, for example: a law/regulation name column 30 which retains information indicating the name of the relevant law/regulation concerning cybersecurity; a category column 31 which retains information indicating a macro category within the relevant law/regulation; an ID column 32 which retains the ID for uniquely identifying the relevant required item in the relevant category; and a required item (requirement) column 33 which retains information indicating the relevant required item(s) in the relevant category. Incidentally, the laws and regulations (the security laws and regulations) which are management objects of the laws and regulations database 2 according to this embodiment (and the second embodiment described later) are generic expressions of international laws and domestic laws of every country concerning the cybersecurity as well as various kinds of rules concerning the cybersecurity regarding organizations, systems, and products (an example of components) including soft law such as domestic rules, international rules, industry regulations, company rules, domestic standards, international standards, industry standards, company standards, and domestic and international judicial precedents and court precedents. Specifically speaking, the laws and regulations database 2 manages rule information concerning the cybersecurity with respect to each name of the relevant law/regulation by recording each record by linking the information retained in the law/regulation name column 30, the category column 31, the ID column 32, and the required item (requirement) column 33.

Each of the international standards for control system security such as the EU Cyber Resilience Act and the IEC (International Electrotechnical Commission) 62443 is an example of the security laws and regulations. The IEC 62443-3-3 classifies the security required items regarding systems into seven categories and the IEC 62443-4-2 classifies the security required items regarding components into seven categories, respectively.

According to the example illustrated in Fig. 3, the category [System integrity] is one of the seven categories, which is a category regarding the system integrity. Regarding [System integrity], [ID: 1] requires [Communication integrity], that is, the relevant component is required to have an information integrity checking function. In the required item (requirement) column 33, [Communication integrity] is mentioned and an explanation for carrying out the requirement is also described in the same column.

### (Configuration Example of Security Knowledge Database 3)

Fig. 4 is a diagram illustrating an example of the configuration of the security knowledge database 3 according to the first and second embodiments.

The security knowledge database 3 is a table for managing information about the knowledge regarding the cybersecurity. Records of the security knowledge database 3 include, for example: a cyber kill chain (hereinafter also simply referred to as the "kill chain") phase column 40 indicating procedures for an attacker to perform an attack against information systems or control systems; an ID column 41; and an attack technique column 42 and a measure column 43 which are linked to each phase. Incidentally, there are many ways of classifying the respective phases in the kill chain phase column 40, including those which are made public. Of these way of classification, the phases classified and specialized in the control systems include nine respective phases from an initial access [Initial-access] to an impact [Impact]. Moreover, on one hand, attack techniques managed by the attack technique column 42 summarize attack methods assumed for each phase of the kill chain; and, for example, in a case of the initial access, [Drive by Compromise], [Exploit Public-Facing Application], etc. are known. On the other hand, in the measure column 43, application isolation and execution within a specified range [Application Isolation and Sandboxing] and protection from known vulnerability [Exploit Protection] are listed as measures (defense measures and/or mitigation measures). Incidentally, it is assumed that the attack technique column 42 and the measure column 43 respectively store, in addition to the above-mentioned attack technique name(s) and the measure name(s), explanation texts about them. Specifically speaking, the security knowledge database 3 manages the information about the knowledge regarding the cybersecurity with respect to each kill chain phase by recording the information retained in the kill chain phase column 40, the ID column 41, the attack technique column 42, and the measure column 43 by linking the respective pieces of information on a record basis.

Incidentally, the information used by the security measures presenting system 1 according to this embodiment (and the second embodiment described later), including the information stored in the laws and regulations database 2 and the security knowledge database 3, does not depend on a data structure and may be expressed by any data structure. For example, the data structure appropriately selected from tables, lists, databases, or queues can store the information.

### <System Operation Examples>

Next, an explanation will be provided about each processing executed by the security measures presenting system 1 according to the first embodiment (and the second embodiment described later) with reference to Figs. 5 to 8.

### (Feature Value Calculation Processing)

Fig. 5 is a flowchart 500 illustrating an example flow of feature value calculation processing executed by the security measures presenting system 1 according to the first and second embodiments.

In step S51, the control unit for the security measures presenting system 1 causes the feature value calculation unit 6 to execute processing for automatically extracting and obtaining the category name of the relevant law/regulation from the laws and regulations database 2 and the attack technique name from the security knowledge database 3, respectively. For example, the text data such as [System integrity] in the category column 31 of the laws and regulations database 2 illustrated in Fig. 3 and [Drive by Compromise] in the attack technique column 42 of the security knowledge database 3 illustrated in Fig. 4 are objects to be extracted. Incidentally, regarding the data servers which store the laws and regulations database 2 and the security knowledge database 3, for example, a plurality of data servers may exist for each database over the network. Moreover, pluralities of kinds of laws and regulations databases 2 and security knowledge databases 3 may exist over the network. In such a case, the control unit for the security measures presenting system 1 may cause the feature value calculation unit 6 to automatically select the laws and regulations database 2 from which the category name of the relevant law/regulation is to be obtained, and the security knowledge database 3 from which the attack technique name is to be obtained, and accept the selection operation from the user to designate the laws and regulations database 2 and the security knowledge database 3 from which the relevant data are to be obtained. Consequently, the category name of the relevant law/regulation is automatically obtained from the laws and regulations database 2 and the attack technique name is automatically obtained from the security knowledge database 3. After completing the processing in step S51, the control unit for the security measures presenting system 1 proceeds to step S52.

In step S52, the control unit for the security measures presenting system 1 causes the feature value calculation unit 6 to execute processing for calculating and vectorizing the respective feature values of the category name of the relevant law/regulation and the attack technique name which are extracted in step S51. The feature value(s) herein used means an importance degree and rarity of the text data. For example, there is a TF-IDF (Term Frequency-Inverse Document Frequency) as an index for quantitatively evaluating these values. This is a value calculated as described below, where tf(t, d) represents the number of appearances of the word(s) t in a document d and df(t) represents the number of documents including the word(s) t in the entire document.

When req represents the text data indicating the category name of the relevant law/regulation which is retained in the category column 31 of the laws and regulations database 2, its feature value is expressed as tf(t, req)=count(t, req)/|req|. Similarly, when att represents the text data indicating the attack technique name retained in the attack technique column 42 of the security knowledge database 3, its feature value is expressed as tf(t, att)=count(t, att)/|att|.

Moreover, idf(t) is expressed as idf(t)=log(|REQ|+|ATT|/1+d), so the value of TF-IDF (hereinafter also referred to as the "TF-IDF value") is calculated according to the above with respect to each of the category name of the relevant law/regulation and the attack technique name. Consequently, the appearance frequency and the rarity of the relevant word(s) in all the text data are expressed quantitatively and are thereby vectorized. Incidentally, the method for calculating the feature values of the text data is not limited to the TF-IDF and various kinds of methods can be used.

As a result of the above-described processing executed in step S52, the TF-IDF values which represent the respective feature values regarding the category name and the attack technique name are vectorized. After completing the processing in step S52, the control unit for the security measures presenting system 1 proceeds to step S53.

In step S53, the control unit for the security measures presenting system 1 causes the feature value calculation unit 6 to execute processing for generating distributions with respect to the respective values indicating the feature values of the category name of the relevant law/regulation and the attack technique name which are calculated and vectorized in step S52 (hereinafter referred to as "topic distributions"). In this embodiment (and the second embodiment described later), the topic distribution is generated by the feature value calculation unit 6 with respect to each of the TF-IDF values of the category name of the relevant law/regulation and the attack technique name which are vectorized. The generation of this topic distribution in step S53 is implemented by performing distribution conversion by using, for example, LDA (Latent Dirichlet Allocation). This purpose is to extract the information effectively by identifying important words in the text by means of the TF-IDF and extracting a topic (meaning) of the text by means of the LDA. The LDA is a method which is very effective in extracting a common topic or theme from a plurality of documents and is based on the idea that, assuming each document is composed of a plurality of topics, each topic is expressed with a set of specified words. Therefore, it becomes possible to extract the intention of the required item(s), an attack(s), and a feature(s) under the relevant law/regulation with regard to the content of the category of the relevant law/regulation and the attack technique. Consequently, after the calculation in step S52, the topic distribution is generated for each of the values (the TF-IDF values) indicating the feature values of the category name of the relevant law/regulation and the attack technique name which are vectorized. After completing the processing in step S53, the control unit for the security measures presenting system 1 proceeds to step S54.

In step S54, the control unit for the security measures presenting system 1 causes the feature value calculation unit 6 to execute processing for identifying the similarity between the topic distributions generated in step S53. This processing in step S54 is performed in order to measure the distance between the category of the relevant law/regulation and the attack technique. For example, cosine similarity or Euclidean distance is used for the similarity measurement. Of these methods, the cosine similarity is to calculate a cosine of an angle formed by the respective distributions and indicate that these distributions are closer to each other as the value of the cosine becomes closer to one. Consequently, the similarity between the topic distributions generated in step S53 is identified. After completing the processing in step S54, the control unit for the security measures presenting system 1 proceeds to step S55.

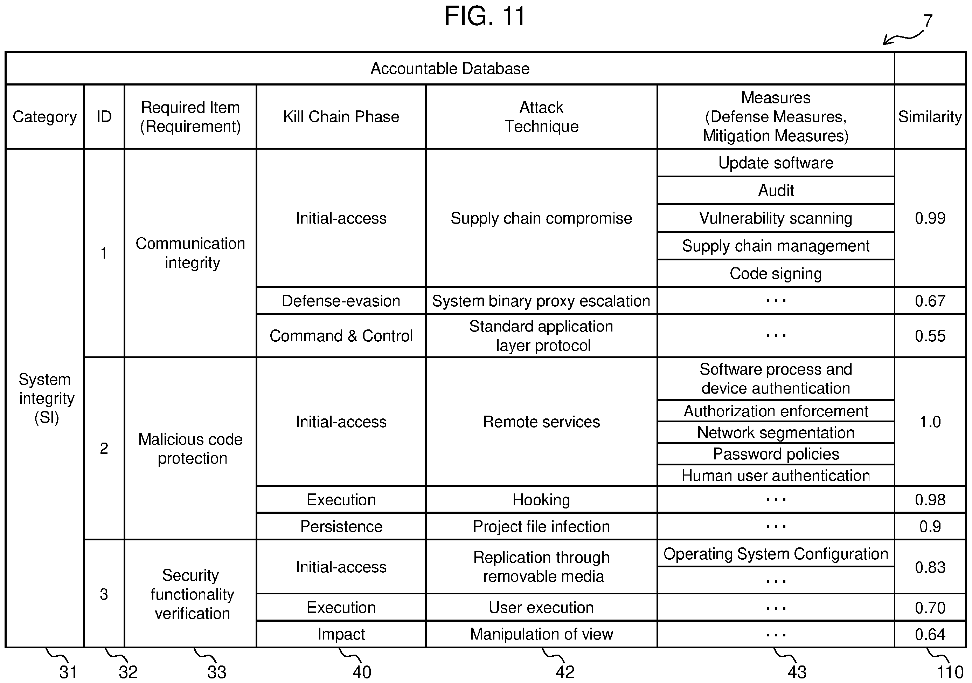

In step S55, the control unit for the security measures presenting system 1 causes the feature value calculation unit 6 to execute processing for identifying the most similar attack technique regarding each category name based on the similarity identified in step S54, collecting measures (defense measures and/or mitigation measures) which are linked to the above-identified attack technique from the security knowledge database 3, and storing them in the accountable database 7 in a manner illustrated in Fig. 6 (and Fig. 11).

### (Configuration Example of Accountable Database 7)

Fig. 6 is a diagram illustrating an example of the configuration of the accountable database 7 according to the first embodiment.

The accountable database 7 is a database for recording the data extracted from the laws and regulations database 2 and the data extracted from the security knowledge database 3 in a manner linking them to each other based on the similarity between the topic distributions identified in step S54 as described earlier. Records of the accountable database 7 according to the first embodiment includes, for example: the category column 31, the ID column 32, and the required item (requirement) column 33 which retain data obtained from the laws and regulations database 2; the kill chain phase column 40, the attack technique column 42, and the measure column 43 which retain data obtained from the security knowledge database 3; and a similarity column 60 indicating the similarity between them. Of these columns, the content of the category column 31, the ID column 32, and the required item (requirement) column 33 which retain the data obtained from the laws and regulations database 2, and the content of the kill chain phase column 40, the attack technique column 42, and the measure column 43 which retain data obtained from the security knowledge database 3 are similar to the content of the laws and regulations database 2 or the security knowledge database 3.

For example, as a threat to [Communication integrity] which is the required item (requirement) of the relevant law/regulation regarding the category [System integrity], there is a possibility that an attacker may execute [Program upload] as the attack technique in an information collection phase [Collection]. In this case, a system administrator for the relevant system should preferably execute access management [Access management] and authorization enforcement [Authorization Enforcement] as the measures. The basis for the above is that the similarity between the content of [Communication integrity] which is the required item (requirement) of the relevant law/regulation, and the content of [Program upload] which is the attack technique, is 0.99 which is extremely high. The accountable database 7 stores, in addition to the above, the data with high similarity in descending order from the top. Incidentally, three pieces of data in descending order from the highest similarity are stored in the accountable database 7 according to the first embodiment.

Consequently, the most similar attack technique with respect to each category name is identified based on the similarity identified in step S54 and the measures linked to the above-identified attack technique are collected from the security knowledge database 3 and are stored in the accountable database 7. After completing the processing in step S55, the control unit for the security measures presenting system 1 terminates the feature value calculation processing illustrated in the flowchart 500 in Fig. 5.

### (Measure Presenting Processing)

Fig. 7 is a flowchart 700 illustrating a flow example of the measure presenting processing executed by the security measures presenting system 1 according to the first and second embodiments.

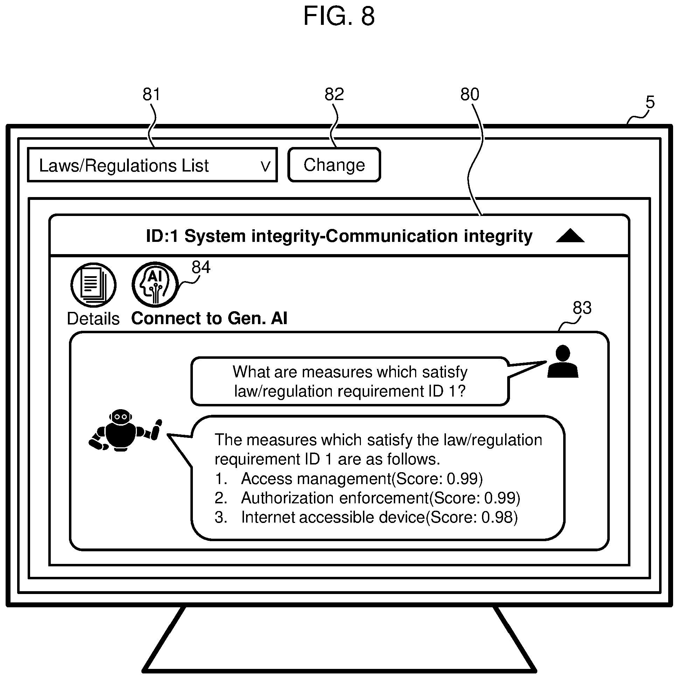

In step S71, the control unit for the security measures presenting system 1 accepts text data which has been input by the user to the input device 4 (hereinafter also referred to as "input data") via the input unit, that is, the input/output interface 15 and then causes the measure presenting unit 8 to execute processing for vectorizing the input data. Incidentally, the input data herein used means text data indicating the content such as "What are measures which satisfy the law/regulation requirement ID1?" as shown in Fig. 8, and "What is a threat to the law/regulation requirement XXX?" and "In which phase the threat to the law/ regulation requirement XXX happens?" Moreover, external resources such as an Embedding API (Application Programming Interface) can be used to vectorize the input data as described above. Consequently, after the input data is accepted via the input unit, that is, the input/output interface 15, it is vectorized by the measure presenting unit 8. After completing the processing in step S 71, the control unit for the security measures presenting system 1 proceeds to step S72.

In step S72, the control unit for the security measures presenting system 1 causes the measure presenting unit 8 to execute processing for calculating similarity between the input data vectorized in step S71 and the data existing in the accountable database 7, and extracting data with high similarity from the accountable database 7. Incidentally, the similarity is calculated by using the cosine similarity and the Euclidean distance as described earlier. Consequently, data which is close to the content of the input operation performed by the user to the input device 4 is extracted from the accountable database 7 based on the similarity. After completing the processing in step S72, the control unit for the security measures presenting system 1 proceeds to step S73.

In step S73, the control unit for the security measures presenting system 1 causes the measure presenting unit 8 to execute processing for transmitting the data extracted from the accountable database 7 in step S72, together with the similarity to the input data, to the display device 5. Consequently, the above-described data together with the similarity to the input data is transmitted to the display device 5.

Specifically speaking, the control unit for the security measures presenting system 1 causes the measure presenting unit 8 to refer to the accountable database 7 based on the text data which has been input by the user to the input device 4 and output an appropriate measure(s) to the display device 5, so that the user becomes well aware of its content. Incidentally, this method is premised on the utilization of the generative AI; however, the user may be made well aware of its content by utilizing a conventional classic search method as, for example, a data search method.

The relevant data transmitted to the display device 5 together with the similarity to the input data in step S73 is displayed on the display device 5, for example, in the manner illustrated in Fig. 8. Fig. 8 is a diagram illustrating an example of a screen displayed on the display device 5 in the first embodiment (hereinafter also referred to as the "display screen").

This display screen includes, as illustrated in Fig. 8, a law/regulation selection area 81, a law/regulation change button 82, a system display area 80, an interactive chat area 83, and a generative AI link button 84.

The law/regulation selection area 81 is an area for selecting a law/regulation which requires any action(s) against an organization(s), a system(s), and a component(s). Examples of the relevant law/regulation include various kinds of laws and regulations such as the EU Cyber Resilience Act and the IEC 62443. When the user of the security measures presenting system 1 selects any one of the laws and regulations in the law/regulation selection area 81, the display of the system display area 80 is changed to the content corresponding to the relevant law/regulation.

The law/regulation change button 82 is utilized when it is desired to change the target of the security laws and regulations, for example, as in a case of changing from the EU Cyber Resilience Act to the IEC 62443.

The system display area 80 is an area where the required item (requirement) of the target law/regulation and its details are displayed. Under this circumstance, when the user presses the generative AI link button 84, a chatbot is opened in the interactive chat area 83.

For example, when the user wants to know measures which satisfy [Communication integrity] that is the required item (requirement) for the category [System integrity] which is already displayed, the user sends an enquiry to ask "what are measures to implement the law/regulation requirement [Communication integrity]?"; and then the control unit for the security measures presenting system 1 causes the measure presenting unit 8 to refer to the accountable database 7 and output [Access management] and [Authorization Enforcement] in descending order of similarity from the highest similarity together with the similarity. Therefore, when outputting the measures according to the content of the text data which has been input by the user, the security measures presenting system 1 can visualize the adequacy of the relevant measures by outputting the measures together with the similarity to the input data. Moreover, the effectiveness of the presented measures is confirmed by the high degree of the similarity, so that the user of the security measures presenting system 1 can perform the optimum measure(s) by carrying out the relevant measure(s).

After completing the processing in step S73, the control unit for the security measures presenting system 1 terminates the measure presenting processing illustrated in the flowchart 700 in Fig. 7.

The security measures presenting system 1 according to the first embodiment can link the kill chain phase, the attack technique, and the measure(s) with respect to the item(s) required under the relevant law/regulation(s) from the laws and regulations database 2 and the security knowledge database 3 in consideration of the featured values in the text. Furthermore, the security measures presenting system 1 can select an appropriate proposed measure(s) at high speed by outputting the proposed measures in response to the user's question, together with the similarity, with reference to the accountable database 7 which stores the above-mentioned information, and making the user well aware of the proposed measures and the similarity. As a result, the security measures presenting system 1 can reduce man-hours of the user to comply with the security laws and regulations.

The security measures presenting system 1 according to the first embodiment has been described above.

### Second Embodiment

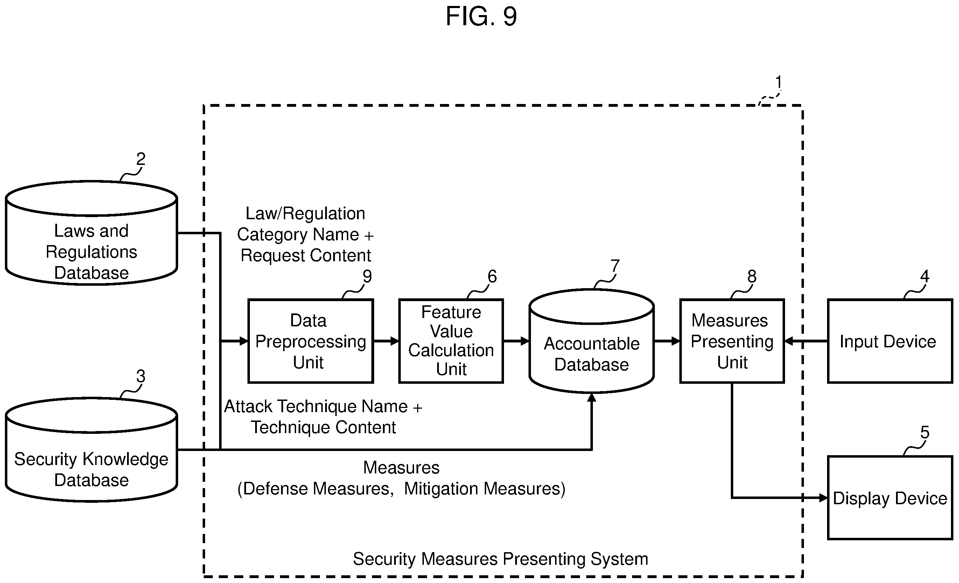

Next, the security measures presenting system 1 according to the second embodiment will be explained by using Figs. 9 to 12 by focusing on the differences from the security measures presenting system 1 according to the first embodiment.

### <System Configuration Example>

Firstly, a configuration example of the security measures presenting system 1 according to the second embodiment will be explained by using Fig. 1 and Fig. 9. Fig. 9 is a diagram illustrating an example of functional blocks of the security measures presenting system 1 according to the second embodiment.

### (Configuration Example of The Entire System)

Incidentally, the configuration of the entire system of the security measures presenting system 1 according to the second embodiment is similar to an example of the configuration of the entire system of the security measures presenting system 1 according to the first embodiment explained earlier with reference to Fig. 1, so an explanation about it has been omitted.

### (Hardware Configuration Example of Security Measures Presenting System 1)

Moreover, a hardware configuration of the security measures presenting system 1 according to the second embodiment is also similar to an example of the hardware configuration of the security measures presenting system 1 according to the first embodiment explained earlier with reference to Fig. 1, so an explanation about it has been omitted.

### (Example of Functional Blocks of Security Measures Presenting System 1 According to the second embodiment)

Next, an example of various kinds of functional blocks possessed by the security measures presenting system 1 according to the second embodiment will be explained by using Fig. 9. Incidentally, the respective blocks described below indicate blocks of functional units, but not configurations of hardware units.

As compared to the security measures presenting system 1 according to the first embodiment, the security measures presenting system 1 according to the second embodiment has the differences described below regarding the configurations of the respective functional blocks of the control unit and the storage unit as illustrated in Fig. 9. Regarding other configurations, the security measures presenting system 1 according to the second embodiment is similar to the security measures presenting system 1 according to the first embodiment, so only the above-mentioned differences will be explained here.

With the security measures presenting system 1 according to the second embodiment, the control unit has the respective functional blocks of Fig. 9, that is, the feature value calculation unit 6, the measure presenting unit 8, and the data preprocessing unit 9 as illustrated in Fig. 9. Specifically speaking, the control unit for the security measures presenting system 1 according to the second embodiment further includes the data preprocessing unit 9 as compared to the control unit for the security measures presenting system 1 according to the first embodiment.

The data preprocessing unit 9 executes data preprocessing (whose details will be described later with reference to Fig. 10).

Moreover, the security measures presenting system 1 according to the second embodiment is configured as illustrated in Fig. 9 so that the accountable database 7 stored in the storage unit includes a similarity column 110. The similarity column 110 of the accountable database 7 possessed by this security measures presenting system 1 according to the second embodiment has the difference from the similarity column 60 of the accountable database 7 possessed by the security measures presenting system 1 according to the first embodiment such that, for example, variations of data stored in the similarity column 110 are different (the details will be described later with reference to Fig. 11).

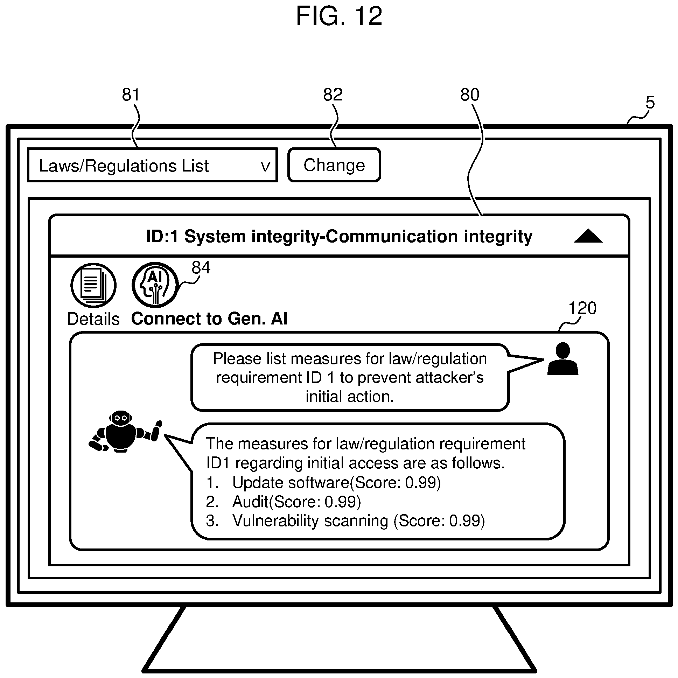

Furthermore, in the second embodiment, the content of an interactive chat area 120 on the display screen displayed by the display device 5 is different from the content of the interactive chat area 83 on the display screen displayed by the display device in the first embodiment (the details will be described later with reference to Fig. 12).

### <System Operation Examples>

Next, the respective processing executed by the security measures presenting system 1 according to the second embodiment will be explained with reference to Figs. 10 to 12.

### (Data Preprocessing)

Fig. 10 is a flowchart 1000 illustrating a flow example of the data preprocessing executed by the security measures presenting system 1 according to the second embodiment. This data preprocessing is executed, as illustrated in Fig. 9, by the data preprocessing unit 9 as a preliminary stage of the feature value calculation processing explained by using the flowchart 500 in Fig. 5 in the first embodiment.

In step S101, the control unit for the security measures presenting system 1 causes the data preprocessing unit 9 to execute processing for obtaining the law/regulation category name and the text data indicating its content from the laws and regulations database 2 and the attack technique name and the text data indicating its content from the security knowledge database 3, respectively. Consequently, the law/regulation category name and the text data indicating its content are obtained from the laws and regulations database 2 and the attack technique name and the text data indicating its content are obtained from the security knowledge database 3. Incidentally, for example, if a plurality of languages are mixed in all the obtained text data attributable to, for example, a case where the laws and regulations database 2 and the security knowledge database 3, from which the relevant text data are obtained, exist in plurality, the control unit for the security measures presenting system 1 may cause the data preprocessing unit 9 to automatically unify all the obtained text data in English by translating the obtained text data as appropriate. After completing the processing in step S101, the control unit for the security measures presenting system 1 proceeds to step S102.

In step S102, when writings in uppercase letters and writings in lowercase letters are mixed regarding the same item included in the text data obtained in step S101, the control unit for the security measures presenting system 1 causes the data preprocessing unit 9 to execute processing for unifying the writings in the lowercase letters by converting the uppercase letters into the lowercase letters. Consequently, when the writings in the uppercase letters and the writings in the lowercase letters are mixed regarding the item included in the relevant text data, the writings are unified in the lowercase letters by converting the uppercase letters into the lowercase letters. Incidentally, all the writings are unified in the lowercase letters in this embodiment; however, for example, the situation where the writings in the uppercase letters and the writings in the lowercase letters are mixed regarding the same item may be solved by unifying all the writings in the uppercase letters. After completing the processing in step S102, the control unit for the security measures presenting system 1 proceeds to step S103.

In step S103, the control unit for the security measures presenting system 1 causes the data preprocessing unit 9 to execute processing for judging whether or not at least any one of stop words, special characters, or numbers are included in the text data entirely unified in the lowercase letters in step S102. On one hand, if it is determined that any one of the stop words, the special characters, or the numbers are included in the text data (step S103: YES), the processing proceeds to step S104 in order to delete the stop words, the special characters, or the numbers from the relevant text data. On the other hand, if it is determined that any one of the stop words, the special characters, or the numbers are not included in the relevant text data (step S103: NO), the processing directly proceeds to step S105.

In step S104, the control unit for the security measures presenting system 1 causes the data preprocessing unit 9 to execute processing for deleting the stop words, the special characters, and/or the numbers, regarding which it was determined in step S103 that the stop words, the special characters, and/or the numbers are included (step S103: YES), from the relevant text data. Consequently, the stop words, the special characters, and/or the numbers are deleted from the relevant text data. After completing the processing in step S104, the control unit for the security measures presenting system 1 proceeds to step S105.

In step S105, the control unit for the security measures presenting system 1 causes the data preprocessing unit 9 to execute processing for judging whether or not any description about a cited document(s) (hereinafter also simply referred to as the "cited document(s)") is included in the relevant text data. On one hand, if it is determined that the cited document(s) is included in the relevant text data (step S105: YES), the processing proceeds to S106 in order to delete the cited document(s) from the relevant text data. On the other hand, if it is determined that the cited document(s) is not included in the relevant text data (step S105: NO), the control unit directly terminates the data preprocessing illustrated in the flowchart 1000 in Fig. 10.

In step S106, the control unit for the security measures presenting system 1 causes the data preprocessing unit 9 to execute processing for deleting the cited document(s) from the relevant text data. This processing in step S106 is performed by, for example, deleting the text including and after "Citation." Consequently, the cited document(s) is deleted from the relevant text data, the text data including only an explanation about the category of the relevant law/regulation and an explanation about the attack technique is constructed. After completing the processing in step S106, the control unit for the security measures presenting system 1 terminates the data preprocessing illustrated in the flowchart 1000 in Fig. 10.

After the execution of this data preprocessing illustrated in the flowchart 1000 in Fig. 10, the security measures presenting system 1 according to the second embodiment can construct the accountable database 7 as illustrated in Fig. 11 by executing the feature value calculation processing explained by using the flowchart 500 in Fig. 5 in the first embodiment and identifying the similarity between the topic distributions.

Under this circumstance, the accountable database 7 in the second embodiment shows, as illustrated in Fig. 11, there is a possibility that as a threat to [Communication integrity] which is the required item (requirement) for the relevant law/regulation of the category [System integrity], an attacker may execute [Supply chain compromise] as an attack technique to an attack target system in the initial access phase [Initial-access]. Regarding this, as the accountable database 7 in the second embodiment is constructed as illustrated in Fig. 11, a system administrator of the relevant system who is the user of the security measures presenting system 1 can accurately recognize that it is necessary to execute the software update [Update software] and/or vulnerability scanning [Vulnerability scanning] as the measures against the attack.

In the first embodiment, different measures are presented for the same required item (requirement). The reason for that is because, on one hand, the security measures presenting system 1 according to the first embodiment does not include the data preprocessing unit 9 and the data preprocessing is not performed before the execution of the feature value calculation processing, so the accuracy of semantic analysis of the text is relatively lower than that of the security measures presenting system 1 according to the second embodiment. On the other hand, the security measures presenting system 1 according to the second embodiment further includes the data preprocessing unit 9 and can thereby perform the data preprocessing before the execution of the feature value calculation processing, so it is possible to improve the accuracy of the similarity calculated regarding, for example, the category of the relevant law/regulation, the attack technique, and the measures which are stored in the accountable database 7. In fact, as illustrated in Fig. 11, variations of the value stored in the similarity column 110 of the accountable database 7 in the second embodiment are more noticeable than those of the value stored in the similarity column 60 of the accountable database 7 in the first embodiment which is illustrated in Fig. 6.

Fig. 12 is a diagram illustrating an example of a screen (display screen) displayed on the display device 5 in the second embodiment. In the second embodiment as described earlier, the content of the interactive chat area 120 on the display screen displayed on the display device 5 as illustrated in Fig. 12 is different from the content of the interactive chat area 83 on the display screen displayed in the first embodiment as illustrated in Fig. 8. This is because the stored measures and similarity are different between the accountable database 7 in the second embodiment and the accountable database 7 in the first embodiment as described earlier, so that even if the user sends a question similar to that in the first embodiment, the data referenced in the accountable database 7 would be different.

The security measures presenting system 1 according to the second embodiment has been explained above.

The respective embodiments of the present invention described above can be summarized as follows.
(1) The security measures presenting system 1 is a system for presenting information indicating security measures by displaying the information on the display device 5 and is configured of a computer which at least includes the arithmetic device 11 and the storage device 14 and is mutually connected to the input device 4 and the display device 5 outside the computer in a manner capable of mutual data communication, wherein the storage device 14 stores: rule information with respect to a rule concerning security, the rule information including at least a target system indicating a targeted system to which a security measure is to be applied, and required items for a component included in the target system; and measure information indicating a kill chain phase which represents an execution phase of an attack, an attack technique which represents an attack method to be used in the kill chain phase, and measures for defending and/or alleviating the attack technique; and wherein the arithmetic device 11: associates a required item included in the rule information with the measure information which satisfies the required item; receives content of an input operation by a user to the input device 4 from the input device 4; extracts a measure according to the content of the received input operation by the user from the measure information associated with the required item; and transmits information including the extracted measure, as information indicating the security measure, to the display device 5.

Consequently, the security measures presenting system 1 can automatically identify the appropriate measure(s) in accordance with the various rules such as the laws, regulations, and the restrictions concerning the security and present the identified measure(s) to the user.

(2) The arithmetic device 11 transmits, together with the extracted measure, similarly which is an index indicating a degree of linking of the measure to the required item as information indicating the security measure to the display device 5.

(3) The arithmetic device 11: calculates a feature value of text data describing the required item according to an importance degree and rarity of words contained in the text data; calculates a feature value of text data describing the attack technique according to an importance degree and rarity of words contained in the text data; calculates similarity between the feature value of the text data describing the required item and the feature value of the text data describing the attack technique; causes the store device 14 to store, based on a result of the calculated similarity, the required item, the attack technique, and the measure information linked to the required item and the attack technique; calculates, according to the content of the received input operation by the user, similarity between the content of the input operation and the measure information; and transmits the measure information as information indicating the security measure to the display device 5 based on the calculated similarity.

(4) The arithmetic device 11: converts the feature value of the text data describing the required item and the feature value of the text data describing the attack technique, respectively, to a vector format; generates topic distributions respectively with respect to a vector indicating the feature value of the text data describing the required item and a vector indicating the feature value of the text data describing the attack technique; and calculates similarity between the generated topic distributions.

(5) The text data indicating the required item which is stored in the storage device 14 includes the category name of the rule concerning the security and its content; wherein the text data indicating the attack technique which is stored in the storage device 14 includes the name of the attack technique and its content; and wherein the arithmetic device 11 calculates similarity between the text data indicating the required item and the text data indicating the attack technique.

(6) Before calculating the feature value of the text data describing the required item and/or the feature value of the text data describing the attack technique, the arithmetic device 11 performs specified preprocessing on the text data.

(7) The arithmetic device 11: converts data stored in the storage device 14 into a natural language; and infers the measure information to be transmitted to the display device 5 as the information indicating the security measure on the basis of the similarity between the data converted into the natural language and the content of the received input operation by the user.

Incidentally, the present invention is not limited to the above-described embodiments and can be implemented by using arbitrary constituent elements within the scope without departing from its gist.

As one example, the target system of the security measures of the security measures presenting system 1 is not limited to various kinds of control systems (OT systems), but may be any arbitrary systems such as IT (Information Technology) systems.

The above-described embodiments and variations are just examples and the present invention is not limited to the content of these embodiments and variations unless the features of the invention are impaired. Also, the various embodiments and variations have been described above, but the present invention is not limited to their content. Other aspects which can be thought of within the scope of the technical idea of the present invention are also included within the scope of the present invention.

In each aforementioned drawing, control lines and information lines which are considered to be necessary for the explanation are indicated; however, not all control lines or information lines for implementation may be necessarily indicated. For example, it may be considered that practically almost all the components are connected to each other.

Furthermore, the aforementioned arrangement pattern of the respective functional units of the security measures presenting system 1 explained above is merely one example. The arrangement pattern of the respective functional units can be changed to an optimum arrangement pattern from the viewpoint of the performance, processing efficiency, communication efficiency, etc. of hardware and software possessed by the security measures presenting system 1.

Furthermore, regarding each of the aforementioned configurations, functions, processing units, processing means, etc., part or whole of them may be implemented by hardware by, for example, designing it with integrated circuits, or may be implemented by software by the arithmetic device 11 by interpreting and executing a program for implementing each of the functions.

## Claims

1. A security measures presenting system for presenting information indicating security measures by displaying the information on a display device,
the security measures presenting system configured of a computer comprising at least an arithmetic device and a storage device, the computer being mutually connected to an input device and the display device outside the computer in a manner capable of mutual data communication,
wherein the storage device stores:
rule information with respect to a rule concerning security, the rule information including at least a target system indicating a targeted system to which a security measure is to be applied, and required items for a component included in the target system; and
measure information indicating a kill chain phase which represents an execution phase of an attack, an attack technique which represents an attack method to be used in the kill chain phase, and measures for defending and/or alleviating the attack technique; and
wherein the arithmetic device:
associates a required item included in the rule information with the measure information which satisfies the required item;
receives content of an input operation by a user to the input device from the input device;
extracts a measure according to the content of the received input operation by the user from the measure information associated with the required item; and
transmits information including the extracted measure, as information indicating the security measure, to the display device.

2. The security measures presenting system according to claim 1,
wherein the arithmetic device transmits, together with the extracted measure, similarly which is an index indicating a degree of linking of the measure to the required item as information indicating the security measure to the display device.

3. The security measures presenting system according to claim 1 or 2,
wherein the arithmetic device:
calculates a feature value of text data describing the required item according to an importance degree and rarity of words contained in the text data;
calculates a feature value of text data describing the attack technique according to an importance degree and rarity of words contained in the text data;
calculates similarity between the feature value of the text data describing the required item and the feature value of the text data describing the attack technique;
causes the store device to store, based on a result of the calculated similarity, the required item, the attack technique, and the measure information linked to the required item and the attack technique;
calculates, according to the content of the received input operation by the user, similarity between the content of the input operation and the measure information; and
transmits the measure information as information indicating the security measure to the display device based on the calculated similarity.

4. The security measures presenting system according to claim 3,
wherein the arithmetic device:
converts the feature value of the text data describing the required item and the feature value of the text data describing the attack technique, respectively, to a vector format;
generates topic distributions respectively with respect to a vector indicating the feature value of the text data describing the required item and a vector indicating the feature value of the text data describing the attack technique; and
calculates similarity between the generated topic distributions.

5. The security measures presenting system according to claim 1,
wherein the text data indicating the required item which is stored in the storage device includes a category name of the rule concerning the security and its content;
wherein the text data indicating the attack technique which is stored in the storage device includes a name of the attack technique and its content; and
wherein the arithmetic device calculates similarity between the text data indicating the required item and the text data indicating the attack technique.

6. The security measures presenting system according to claim 3,
wherein before calculating the feature value of the text data describing the required item and/or the feature value of the text data describing the attack technique, the arithmetic device performs specified preprocessing on the text data.

7. The security measures presenting system according to claim 3, wherein
the arithmetic device:
converts data stored in the storage device into a natural language; and
infers the measure information to be transmitted to the display device as the information indicating the security measure on the basis of the similarity between the data converted into the natural language and the content of the received input operation by the user.

8. A security measures presenting method for presenting information indicating security measures by displaying the information on a display device,
the security measures presenting method performed by using a computer comprising at least an arithmetic device and a storage device, the computer being mutually connected to an input device and the display device outside the computer in a manner capable of mutual data communication,
wherein the storage device stores:
rule information with respect to a rule concerning security, the rule information including at least a target system indicating a targeted system to which a security measure is to be applied, and required items for a component included in the target system; and
measure information indicating a kill chain phase which represents an execution phase of an attack, an attack technique which represents an attack method to be used in the kill chain phase, and measures for defending and/or alleviating the attack technique; and
wherein the arithmetic device:
associates a required item included in the rule information with the measure information which satisfies the required item;
receives content of an input operation by a user to the input device from the input device;
extracts a measure according to the content of the received input operation by the user from the measure information associated with the required item; and
transmits information including the extracted measure, as information indicating the security measure, to the display device.
